# EUROPEAN PATENT SPECIFICATION

(11) **EP 1 849 326 B1**
(45) Date of publication and mention of the grant of the patent: **22.06.2011**
(21) Application number: 06703161.7
(22) Date of filing: 25.01.2006
(51) Int. Cl.: H04W 28/24

(54) **METHOD OPTIMISING RADIO CONNECTIONS IN MOBILE TELECOMMUNICATIONS NETWORKS**
VERFAHREN ZUR OPTIMIERUNG VON FUNKVERBINDUNGEN IN MOBILTELEKOMMUNIKATIONSNETZEN
PROCEDE D'OPTIMISATION DE CONNEXIONS RADIO DANS DES RESEAUX DE TELECOMMUNICATION MOBILES

(30) Priority: 27.01.2005 GB 0501754
(43) Date of publication of application: 31.10.2007
(73) Proprietor: Hutchison Whampoa Three G IP (Bahamas) Limited, Nassau, New Providence (BS)
(72) Inventor: JEROME, Danneel, Berkshire SL6 8RG (GB)
(74) Representative: Crawford, Andrew Birkby
(86) International application number: PCT/GB2006/000248
(87) International publication number: WO 2006/079802

(56) References cited:
- WO-A-03/055257
- DE-A1- 10 306 453
- US-A- 6 167 261
- US-B1- 6 397 061

## Description

The present invention relates to the establishment of radio connections in 3G mobile telecommunication networks, on the basis of the equipment and/or data service being used, and in particular to the establishment of such links using secondary information to inform the network of the type of equipment and/or data service being used.

### Background to the Invention

Present mobile telecommunication devices carry much more information than simply voice conversations, in particular users can access high-speed packet data services from mobile devices. Further, in addition to using their mobile handset to access such data services directly, users are also able to utilise a mobile handset as a connecting device to connect another device, for instance a laptop computer, to the data network. The problems which arise in such systems are described below in the context of a 3G network, it being understood that corresponding issues arise also in other networks. A prior publication US2006/0229069 relates to LAN's and discloses a method for exchanging data in a wireless connection where the transmission channel is automatically adapted for the exchange.

Typically, mobile users may access three different types of data or service domain:
(1) The services offered by the mobile telecommunications network operator (e.g. news browsing, messaging...),
(2) The internet (e.g. web browsing...) via the network operator or a third party internet service provider (ISP).
(3) A corporate intranet (e.g. email, intranet browsing, corporate applications...).

Also, the same mobile users may access data services via three main different types of equipment:
(a) directly from a 3G mobile handset (i.e. the browser or messaging application resides on the mobile handset); or
(b) from a laptop connected to a 3G mobile handset (i.e. the browser or application resides on the laptop, the 3G mobile handset or alternatively a 3G data card is used only as a modem); or
(c) from a PDA connected to a 3G mobile handset (i.e. the browser or application resides on the PDA, the 3G mobile handset or alternatively a 3G data card is used only as a modem).

When offering access to data services, the operator aims to optimise its radio network with two main objectives. Firstly, it aims to provide the best user experience to its customers, and secondly it aims to maximise the capacity of the network in order to accommodate as many users as possible.

In a 3G WCDMA (Wideband Code-Division Multiple Access) radio network, the optimisation of data services usually consists in finely tuning the parameters that rule the management of the packet radio bearer.

The following provides an overview of how packet radio bearers are managed.
Figure 1 shows the Quality of Service (QoS) architecture in UMTS networks as depicted in 3GPP specification (TS 23.107 "QoS concept and architecture").
Figure 2 shows a simplified representation of the topology of a 3G network and of the essential bearers that enable the user to access data services.

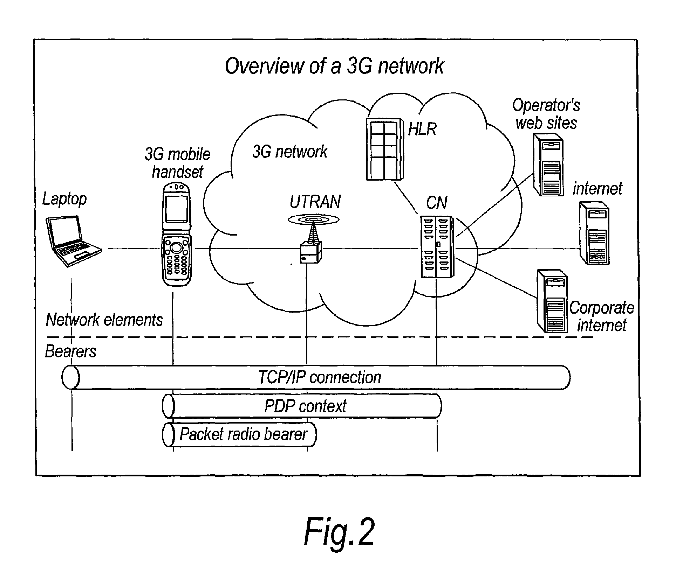

In Figure 2, the 3G network is simplified and represented by:
- A radio network (UMTS Terrestrial Radio Access Network (UTRAN)): responsible for handling users' mobility and for allocating resources to the users in an efficient manner.
- A core network (CN): responsible for routing the packets and accessing external service domains (such as operator's services, internet...).
- A home location register (HLR): responsible for authenticating and policing the users wanting access to the 3G network.

Outside of the 3G network are the servers offering access to the different service domains.

Figure 2 also shows, in a simplified manner, the hierarchy of the different bearers supporting the connection:
- The TCP/IP connection runs between the applications on the user's equipment (the laptop in the Figure 2) and the servers where the services are located;
- The Packet Data Protocol (PDP) context is the bearer supporting the TCP/IP connection across the 3G network, hence it is established between the mobile handset and the end point of the CN; and
- The packet radio bearer is the bearer supporting the PDP context across the UTRAN, hence it is established between the mobile handset and the UTRAN.

Note that in Figure 2, the user is actually using a laptop connected to his 3G mobile handset (via e.g. a USB cable or bluetooth) to access data services. If the user was using his handset directly, then the TCP/IP connection would terminate in the mobile handset. Hereinafter the term, terminal equipment, is used to refer to the device through which the user is accessing the data service. This may be a laptop, PDA or indeed the mobile handset. Hereinafter, the term, mobile terminal, will be used to refer to the 3G device which is in direct communication with the 3G network. This may be a mobile phone or a mobile data card. It will be understood that these terms apply to corresponding devices in other mobile telecommunication networks. The term, user equipment, is used to refer to either mobile terminals or terminal equipment.

When the user wants to access data services from one of the web sites, the following process will occur:
• The mobile handset shall first request the CN to establish a PDP context. In its request, the handset shall specify, among other things, the access point name (APN) and the quality of service (QoS).
   o The APN represents the service domain the user wants to access (e.g. the operator's web sites, the internet...). Depending on the operator's strategy, it may have one unique APN for all the services, or one APN per domain (operator's sites, internet, corporate intranet...) or even one APN per service (weather, news, sport, etc.). This is totally left to the operator's choice in the 3GPP standards.
   o The QoS for non real time (NRT) data packet services is defined by attributes such as the traffic class (interactive or background), the bit rate, the priority (1, 2, 3), packet size, etc.
• Before granting the PDP context, the CN checks with the HLR that the request from the mobile is permitted for this user. The HLR contains a database which specifies for each user what APNs the user is allowed to access, and what QoS is permitted for each APN. Depending on his subscription level, a customer may have access to one or more APNs, and each permitted APN may have a different QoS profile.
• If the APN requested is allowed for this user, then the CN may accept the PDP context either with the requested QoS or with a lower QoS depending on the QoS profile stored in the HLR for this APN.
• Then the CN requests the UTRAN to establish the packet radio bearer for the mobile handset. The UTRAN is informed of the QoS granted for this packet radio bearer, but it has no information about the APN.
• Finally, if sufficient radio resources are available, the UTRAN establishes the packet radio bearer towards the mobile handset based on the QoS specified by the CN.

Once all the bearers are set up, the user may send and receive data to and from the domain towards which it has established connection. The UTRAN is then in charge of dynamically allocating and reallocating radio resources to this user depending on his level of activity and on the number of users in the network.

In order to do that, the UTRAN will continuously reconfigure the packet radio bearer. The 3GPP standards allow a packet radio bearer to take many forms: different bit rates (e.g. 8, 32, 64, 128, 384 kbps), different types of channel (dedicated, common, shared), etc. Depending on the UTRAN implementation, there are usually several parameters that enable the operator to trigger the reconfigurations of the packet radio bearer based on its data activity and on timers. In the following, these parameters and timers shall be called packet optimisation parameters.

It is important that the distinction between QoS and packet optimisation parameters be recognised. The QoS parameters are characteristics of the PDP context, such as Traffic Class, THP, Maximum Bit Rate, Maximum Packet Size, etc. They represent the level of service (or SLA) that the network should provide, and are agreed/negotiated at the start of the connection, in response to a request for a certain QoS from the mobile terminal. If resources allow for it, the requested QoS will be allowed, otherwise a reduced set of QoS parameters may be allocated. QoS procedures are standardised by 3GPP (3G Partnership Project).

Packet optimisation parameters on the other hand are generally internal to the UTRAN and are used to decide how to manage the packet radio bearers in the most efficient way. They are not standardised, so each UTRAN vendor can implement its own algorithms and own parameters. For this reason, it is difficult to give an exhaustive list of packet optimisation parameters, however the following briefly summarises the main points.

A packet radio bearer can take many forms. First, it can use different types of physical channels, e.g. a dedicated channel, a shared or common channel or even a non-physical channel. To simplify, when the mobile terminal has a dedicated or shared channel it is in DCH (dedicated channel) state; when the mobile terminal uses a common channel it is in FACH (forward access channel) state; when the mobile terminal has no physical channel it is in PCH (paging channel) state. Furthermore, the UTRAN may decide to release the packet radio bearer while the PDP context remains active. Second, when the mobile terminal has a dedicated channel, this channel may have different bit rates.

The whole point of the optimisation parameters is to decide when to change the type of channel and when to change the bit rate. Those decisions depends mainly on the usage of the bearer by the user, but also of external conditions such as network load (if the network is congested) or radio link conditions (if the user is going too far away from the Node B).

For example, the packet optimisation parameters could include the following:
- Amount of data transmitted or waiting in the buffer over a period of time to trigger the allocation of a dedicated channel,
- Amount of data transmitted or waiting in the buffer over a period of time to trigger the increase of the bit rate a dedicated channel,
- Duration of inactivity to trigger the release of the dedicated channel and the transition to the common channel,
- Duration of inactivity to trigger the complete release of the packet radio bearer,
- Average utilisation of a dedicated channel to trigger the increase or decrease of the bit rate,
- Maximum amount of radio resources (e.g. transmit power, interference) allowed for one dedicated channel before triggering the decrease of the rate,
- Maximum network load before triggering the release of some dedicated channels,
- Amongst other things.

As explained above, the UTRAN is not aware of the type of equipment used by the user, or of the type of service domain accessed, or even of the APN. The only information given to the UTRAN by the CN is the QoS profile of the bearer.

Within the QoS profile, most of the attributes are actually technical parameters, such as for example packet size, maximum bit rates, etc. However, there are two attributes which define the priority level of the bearer with respect to other bearers. These two are:
- The traffic class: which values can be in this case (NRT packet data services) either interactive or background.
- The traffic handling priority (THP): which values can be 1, 2 or 3 and which applies only to interactive traffic class.

Therefore, four different level of priority are available for NRT PDP contexts: (1) interactive THP1, (2) interactive THP2, (3) interactive THP3, and (4) background.

3GPP standards do not specify in detail how to use these two attributes, but only specify the relative priorities of bearers with those attributes. The highest priority bearer will be one with traffic class interactive and THY 1. The lowest priority is one with traffic class background.

In the prior art, this prioritisation is commonly used to decide the amount of resources to allocate to packet radio bearers.

For instance, when two handsets requires at the same time the allocation of radio resources but the UTRAN does not have sufficient capacity to give the maximum bit rate (say 384 kbps) to both of them, then the UTRAN may decide to use the priority attributes of their bearers to differentiate them. If one of the two handsets is higher priority (say interactive THP1) than the other one (say interactive THP3), then the UTRAN may decide to allocate the highest bit rate to the former (say 384 kbps) and a lower available bit rate (say 64 kbps) to the later.

Nevertheless, if there is sufficient capacity in the network to accommodate both requests, then both users would get the maximum bit rate and the quality of service would be the same even though they have different priority attributes.

Another example of how these attributes are commonly used in the literature is in case of congestion in the network and the UTRAN decides to downgrade existing users. Then the UTRAN may use the priority attributes to select the users to downgrade. For instance, if two users have a 384 kbps bearer but one of them is higher priority (say interactive THP2) than the other one (say background), then the UTRAN may first release the bearer of the latter, and only if the congestion is situation is not resolve after that, it will downgrade the former from 384 kbps to say 64 kbps or release its bearer.

Although the above management structures exist, optimising WCDMA radio networks in which users can access three different types of service domain (operator's sites, internet, corporate intranet) over the three different types of equipment (mobile handset, laptop, PDA) as listed above is a key issue for 3G network operators.

Each type of equipment or site has very different behaviour in terms of data transmission. For instance, when the customer uses a mobile handset to access operator services, both the handset and the sites are usually designed to be efficient over a wireless connection, which means that transmission of data over the air is limited to the minimum required. On the other hand, when a customer uses a laptop to access his corporate intranet, neither the laptop nor the intranet are designed to be efficient over wireless connections.

As a result, the laptop and the site tend to send non-essential packets of data (called background traffic hereafter). This background traffic is commonly accepted over fixed networks like the internet or a corporate LAN because the total amount of data sent is deemed fairly small compared to the available bandwidth. However, in a wireless network where resource management is crucial and where the bandwidth is limited, this background traffic may cause serious capacity issues.

This is especially the case in a 3G WCDMA network, where the radio network has been optimised for the accessing operator services from mobile handsets. Indeed, the packet radio bearer parameters are tuned to allocate resources in an efficient manner for this type of services and equipment. However, the background traffic generated by a laptop accessing a corporate intranet may be misinterpreted by the radio network, and therefore may wrongly trigger allocation of resources. This will inevitably result in a waste of resources in the radio network.

Unfortunately, the current 3GPP standards do not have provisions which allow radio networks to ascertain the type of equipment being used by the user or the type of services accessed. Hence, the radio network cannot differentiate between a user accessing the operator's services on his mobile handset and a user accessing his corporate intranet on his laptop connected to his mobile handset.

### Summary of the invention

An aspect of the present invention relates to a method of establishing a data link between a terminal device and a data service over a radio connection between a mobile terminal and a base station in a Universal Mobile Telecommunication System (UMTS) network, comprising the steps of:
receiving a request, from said mobile terminal, for a data link to be established, the request including an access point name primarily indicative of the data service to which access is desired;
establishing a radio connection between said mobile terminal and said base station; and
establishing a data link over said radio connection between said terminal device and said indicated data service; characterised in that
said access point name is secondarily indicative of the type of terminal device in use; the method further comprising the steps of:
determining a set of radio connection optimisation parameters on the basis of said primary and secondary indications; wherein
said radio connection is established according to said optimisation parameters.

### Brief Description of the Drawings

So that the present invention be more readily understood, preferred embodiment will now be described with reference to the accompanying drawings in which:

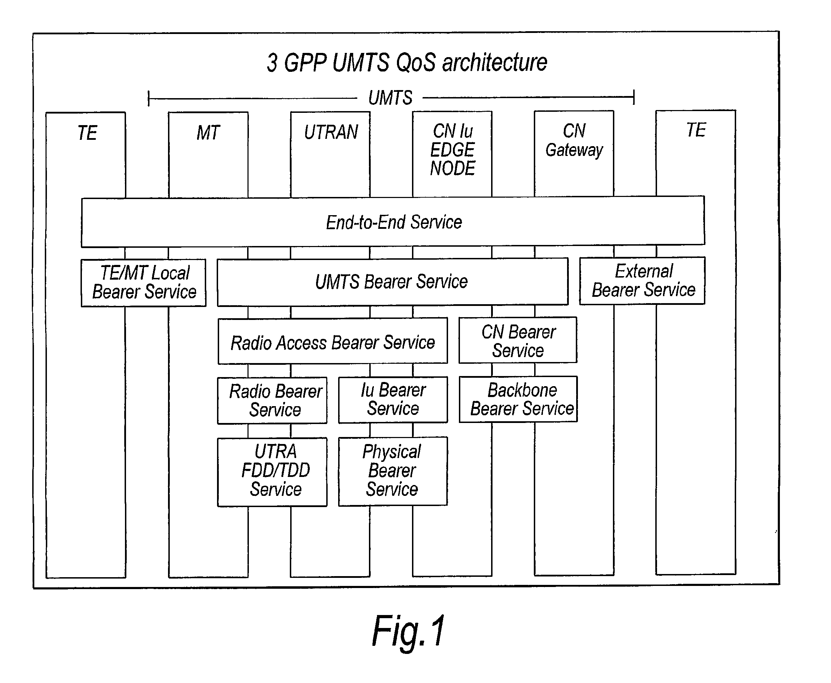

Figure 1 shows the Quality of Service (QoS) architecture in UMTS networks as depicted in 3GPP specification, TS 23.107 "QoS concept and architecture");
Figure 2 shows a simplified representation of the topology of a 3G network and of the essential bearers that enable the user to access data services;

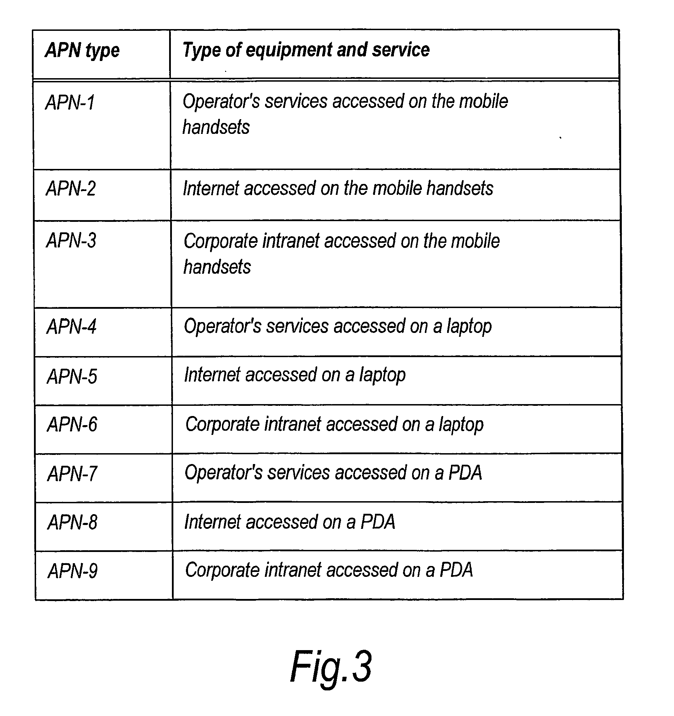

Figure 3 shows the one aspect of the APN architecture according to an embodiment of the present invention; and

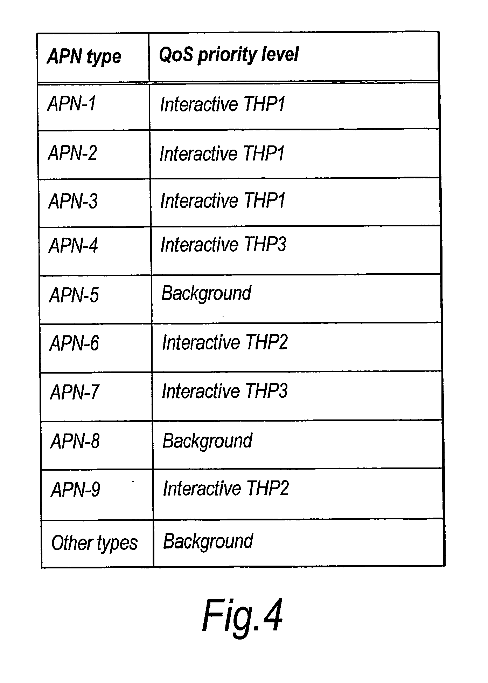

Figure 4 shows another aspect of the APN architecture according to an embodiment of the present invention.

### Description of the Preferred Embodiments of the Present Invention

In order that the present invention be implemented in a 3G mobile telecommunications network, the network, mobile terminal and terminal equipment must be provided with the necessary functionality as will be explained in the following.

Firstly, as described above, in existing systems the mobile terminal may request a priority level when it makes the request for a PDP context. The Core Network, will either allow a PDP context with the priority level that has been requested or will allow a PDP context with a lower priority level if the HLR indicates that a lower priority level is appropriate for the requested APN. So that the present invention may be implemented in a 3G network, when a mobile terminal requests a PDP context to access certain data services, the mobile terminal always requests the highest QoS profile possible, in terms of priority attributes (i.e. traffic class interactive and THP1), whatever terminal equipment is being used or data services accessed. Advantageously, this does not require any change to the 3GPP standards and may be implemented by agreement between the network operator and the manufacturer of the mobile handset.

Secondly, as described above, in existing systems, UTRAN manufacturers usually provide only one set of packet optimisation parameters which applies to all priority levels. So that the present invention may be implemented in a 3G network, the UTRAN manufacturer provides the network operator with a distinct set of packet optimisation parameters for each priority level. Hence, there would be four sets of packet optimisation parameters (one for packet radio bearers with priority interactive THP1, one for packet radio bearers with priority interactive THP2, etc.). Again, this does not require any changes to the 3GPP standards and is instead an implementation option for the UTRAN manufacturer.

Thirdly, in existing systems, there is generally no direct correlation between APNs and terminal equipment and data services. So that the present invention may be implemented in a 3G network, the network operator reserves priority levels for specific usage, i.e. for a specific combination of equipment type and data service domain. QoS profiles, especially priority levels, are assigned to each APN. To achieve this, the operator makes sure that the mobile terminals, and the software given to the users to connect terminal equipment (e.g. laptop or PDA) to their mobile terminals, are provisioned with the correct APNs (this falls under typical agreements between a network operator and its mobile handset manufacturer), and that the HLR is provisioned with the right mapping between APNs and QoS priority levels. Since there are only four priority levels and there may be more combinations of equipment types and service domain types, the operator will regroup together several combinations under the same priority level. This regrouping shall be driven by the similarities in the traffic pattern between different combinations.

This third concept is again beyond the scope of 3GPP standards and is more an implementation option for the operator in its network. Nevertheless, this specific implementation by the network operator may cause issues if one user manage somehow to activate a PDP context with the wrong APN (say the user activates a PDP context for the laptop with the APN reserved for mobile handset based services), or when in bound roamers activate a PDP context to access their home network services but the QoS priority level stored in the HLR is not under the control of the network operator.

A preferred embodiment of the present invention will now be described with reference to Figure 3. Firstly, the mobile terminal, when activating a packet data service, will request a PDP context with:
- The highest priority (interactive THP1) as agreed between the network operator and the mobile terminal manufacturer.
- The appropriate APN as configured by the network operator in the software for the type of service and the type of equipment which the user is using.

The CN will receive the PDP context activation request and will compare the requested QoS with the QoS profile stored in the HLR for this APN. If the QoS profile in the HLR is lower, then the CN will request that the UTRAN establishes a packet radio bearer with a downgraded QoS (say interactive THP3). The UTRAN will then set up the packet radio bearer using the packet optimisation parameters for this priority level (interactive THP3).

The UTRAN does not know that the packet radio bearer is used by a laptop connected to a mobile terminal to access this particular service, but the operator will have optimised the packet optimisation parameters for this specific usage. As a result, the UTRAN will be able to manage the packet radio bearer for this user in the most efficient way possible without affecting the users using different equipments and services.

Figure 3 shows one aspect of the APN architecture which would be implemented by the network operator. Each APN type shown in Figure 3 may contain more than one APN address. For instance, each corporate customer of the network operator will have its own APN for its employees accessing its intranet over their laptops, but all these APNs will fall under type APN-6.

In order to implement this architecture, the network operator would ask the mobile handset manufacturer to configure APN types 1, 2 and 3 for applications on the handset requesting a NRT packet data connection with the mapping shown in Figure 3. Hence, if the user wants to access the internet from his mobile handset, the handset would automatically activate a PDP context towards the APN type 2.

Also, the network operator could ask the handset to reject any PDP context request coming from an external equipment with an APN type 1, 2 or 3. This is to make sure that a user cannot activate a PDP context with one of the APN types reserved for handset-based applications for an external equipment.

The network operator specifies the connection software that is provided to its customers to configure their computer equipment in order to connect to their mobile terminal.

The operator would offer one type of software for laptops, and one software for PDAs. The laptop software would allow the user to connect to one of the three service domains (operator's services, internet, corporate intranet) and would use the right APN type as defined in the table above. The PDA software would do the same.

Figure 4 shows the mapping between APN types and QoS priority levels. The operator provisions its HLR with this mapping. The mapping shown in Figure 4 is based on the following assumptions:
1) Mobile handset based applications, whatever the service accessed, are naturally radio resources efficient, and therefore can be managed in the same manner by the UTRAN. Hence, APN types 1, 2 and 3 are mapped to the same priority level interactive THP1.
2) Corporate intranet applications that are not mobile handset based are very radio inefficient and their traffic pattern is more dictated by the corporate IT applications than by the equipment type. Hence, APN types 6 and 9 are mapped to the same priority level interactive THP2.
3) Operator's services accessed from external equipment are fairly radio efficient and have a very specific traffic pattern dictated by the operator's services design. Hence, APN types 4 and 7 are mapped to the same priority level interactive THP3.
4) Internet applications that are not handset-based have no specific traffic pattern (more depending on the ISP) and can be handled by a default set of parameters that can also be applied to unknown traffic type such as inbound roamers. Hence, APN types 5, 8 and all other types are mapped to the same priority level background.

The network operator tunes the packet optimisation parameters of the UTRAN based on the mapping defined in the table above and on the assumptions made above. This optimisation would require a fair amount of testing in order to find the right parameters. For example, the operator could adapt the resource release timers and the thresholds triggering resource allocation based on the traffic pattern of the types of service and equipment mapped on the relevant priority level.

If the operator was to find out during the optimisation phase that the mapping of APN types onto QoS priority levels is not the optimum one, because for example the traffic pattern of one service type was wrongly estimated, then the operator can simply modify the mapping in the HLR. It does not need to modify the mobile terminals or the connection software already deployed in the field.

In the same way, if the operator was to introduce a new type of external equipment or a new type of service that presents a completely new traffic characteristics and that requires a new tuning of the packet optimisation parameters, then the operator may simply modify the mapping of APN types onto QoS priority levels in the HLR.

It will be appreciated that above APN architecture has been provided by way of example only and that other APN architecture configurations may be used to satisfy the requirements of the network in which the present invention is implemented.

Furthermore, although the present invention has been described in the context of the above preferred embodiments, it will be appreciated that it may be implemented in alternative networks in which similar problems arise and in which solutions are required which fall within the scope of the claims.

In particular, we have indicated above that the present invention relates generally to mobile communications networks. The preferred embodiment details a 3G cellular mobile telecommunications network, and we have also indicated the present invention is particularly applicable to networks corresponding to 3G networks. It should be clarified that in this context, the present invention is applicable generally to cellular mobile telecommunications networks, examples of which include GSM (Global System for Mobile communications), D-AMPS (Digital Advanced Mobile Phone Service), CDMA [IS-95] (Code-Division Multiple Access), GSM + GPRS (General Packet Radio Services), GSM + HSCSD (High-Speed Circuit-Switched Data), GSM + EDGE (Enhanced Data Rates for Global Evolution), UMTS, IMT-2000 and cdma2000.

## Claims

1. A method of establishing a data link between a terminal device and a data service over a radio connection between a mobile terminal and a base station in a Universal Mobile Telecommunication System (UMTS) network, comprising the steps of:
(a) receiving a request from said mobile terminal for a data link to be established, the request including
- an access point name (APN) including an indication of a particular combination of the data service to which access is desired and the type of mobile terminal sending the request, and
- the highest priority level allowed for the mobile terminal;
said network being capable of storing a predefined mapping of a plurality of APN's with a predefined required priority level for each APN
(b) establishing a radio connection between said mobile terminal and said base station; and
(c) establishing a data link over said radio connection between said terminal device and network to access the indicated data service comprising the further steps of :
- comparing the received priority level in the request with the priority level mapped to the received APN that is stored in the network;
- if the priority level mapped to the APN is lower than the received priority level, requesting that a connection is established with a lower priority level than the received priority level, and otherwise requesting that the connection is established with the received priority level;
(d) determining a set of radio connection optimisation parameters on the basis of the requested priority level in step (c);
(e) establishing the radio connection according to said optimisation parameters in step (d).

2. The method of claim 1 further comprising the step of establishing a first bearer between the mobile terminal and said UMTS network in response to said request for a data link.

3. The method of claim 2 in which said first bearer is defined by at least one attribute and said step of determining a set of radio connection optimisation parameters comprises the steps of:
defining said at least one attribute on the basis of the APN; and
defining a set of radio connection optimisation parameters on the basis said at least one attribute.

4. The method of claim 3 wherein the first bearer is a Packet Data Protocol (PDP) context which is established between the mobile terminal and the core network.

5. The method of claim 1 in which the radio connection is a radio bearer.

6. The method of claim 3 in which said at least one attribute is a Quality of Service (QoS) parameter.

7. The method of claim 6 in which said QoS parameters include traffic class and traffic handling priority.

8. The method of claim 7 wherein said step of defining said at least one attribute is a step of defining traffic class and traffic handling priority on the basis of a correspondence between the traffic class and traffic handling priority and the APN, the correspondence being stored in the network.

9. The method of claim 8 in which said correspondence is stored in a Home Location Register.

10. The method of claim 9 in which said optimisation parameters are defined on the basis of a correspondence between the optimisation parameters and the traffic class and traffic handling priority, the correspondence being stored in the network.

11. The method of claim 10 in which said correspondence is stored in the UMTS Terrestrial Radio Access Network (UTRAN).

## Patentansprüche

1. Verfahren zum Herstellen eines Datenlinks zwischen einem Endgerät und einem Datenservice über eine Funkverbindung zwischen einem mobilen Endgerät und einer Basisstation in einem Netz für ein Universales Mobil-Telekommunikationssystem (UMTS), das folgende Schritte umfasst:
(a) Empfangen einer Anforderung von besagtem mobilen Endgerät für die Herstellung eines Datenlinks, wobei die Anforderung einschließt:
- einen Zugangspunktnamen (APN), der eine Anzeige von einer speziellen Kombination des Datenservice, zu dem Zugang erwünscht wird, und des Typs des mobilen Endgeräts einschließt, das die Anforderung sendet und
- die höchste Prioritätsstufe, die für das mobile Endgerät zugelassen ist;
wobei besagtes Netz fähig ist, ein vordefiniertes Mapping einer Vielheit von APN's mit einer vordefinierten erforderlichen Prioritätsstufe für jeden APN zu speichern;
(b) Herstellen einer Funkverbindung zwischen besagtem mobilen Endgerät und besagter Basisstation; und
(c) Herstellen eines Datenlinks über besagte Funkverbindung zwischen besagtem Endgerät und Netz, um auf den angezeigten Datenservice zuzugreifen, was folgende weiteren Schritte umfasst:
- Vergleichen der empfangenen Prioritätsstufe in der Anforderung mit der Prioritätsstufe, die dem empfangenen im Netz gespeicherten APN zugeordnet ist;
- falls die dem APN zugeordnete Prioritätsstufe niedriger als die empfangene Prioritätsstufe ist, Anfordern, dass eine Verbindung mit einer niedrigeren Prioritätsstufe als der empfangenen Prioritätsstufe hergestellt wird und ansonsten Anfordern, dass die Verbindung mit der empfangenen Prioritätsstufe hergestellt wird;
(d) Ermitteln eines Satzes von Optimierungsparametern für die Funkverbindung auf der Basis der in Schritt (c) angeforderten Prioritätsstufe;
(e) Herstellen der Funkverbindung in Übereinstimmung mit besagten Optimierungsparametern in Schritt (d).

2. Verfahren nach Anspruch 1, das weiter den Schritt der Herstellung eines ersten Trägers zwischen dem mobilen Endgerät und besagtem UMTS-Netz als Reaktion auf besagte Anforderung nach einem Datenlink umfasst.

3. Verfahren nach Anspruch 2, in dem besagter erste Träger durch zumindest ein Attribut definiert ist und besagter Schritt der Ermittlung eines Satzes von Optimierungsparametern für die Funkverbindung folgende Schritte umfasst:
Definieren des besagten zumindest einen Attributs auf der Basis des APNs ; und
Definieren eines Optimierungsparameters für die Funkverbindung auf der Basis des besagten zumindest einen Attributs.

4. Verfahren nach Anspruch 3, wobei der erste Träger ein (PDP) Paketdatenprotokoll-Kontext ist, der zwischen dem mobilen Endgerät und dem Core Network hergestellt wird.

5. Verfahren nach Anspruch 1, in dem die Funkverbindung ein Funkträger ist.

6. Verfahren nach Anspruch 3, in dem besagtes zumindest eine Attribut ein QoS-Parameter ist.

7. Verfahren nach Anspruch 6, in dem besagte QoS-Parameter Verkehrsklasse und Verkehrsabwicklungspriorität einschließen.

8. Verfahren nach Anspruch 7, wobei besagter Schritt Definieren des besagten zumindest einen Attributs ein Schritt der Definierung der Verkehrsklasse und Verkehrsabwicklungspriorität auf der Basis einer Übereinstimmung zwischen der Verkehrsklasse und der Verkehrsabwicklungspriorität und des APNs (Zugangspunktnamens) ist, wobei die Übereinstimmung im Netz gespeichert wird.

9. Verfahren nach Anspruch 8, in dem besagte Übereinstimmung in einem Home Location Register gespeichert wird.

10. Verfahren nach Anspruch 9, in dem besagte Optimierungsparameter auf der Basis einer Übereinstimmung zwischen den Optimierungsparametern und der Verkehrsklasse und der Verkehrsabwicklungspriorität definiert sind, wobei die Übereinstimmung im Netz gespeichert wird.

11. Verfahren nach Anspruch 10, in dem besagte Übereinstimmung im UMTS Terrestrial Radio Access Network (UTRAN) gespeichert wird.

## Revendications

1. Procédé d'établissement d'une liaison de données entre un dispositif terminal et un service de données sur une connexion radio entre un terminal mobile et une station de base dans un réseau de Système de Télécommunications Mobile Universel (UMTS), comprenant les étapes consistant à :
(a) recevoir dudit terminal mobile une requête d'établissement de liaison de données, la requête comportant
- un nom de point d'accès (APN) comportant une indication d'une combinaison particulière du service de données auquel l'accès est souhaité et du type de terminal mobile envoyant la requête, et
- le plus niveau de priorité autorisé pour le terminal mobile ;
ledit réseau étant capable de stocker un mappage prédéfini d'une pluralité d'APN avec un niveau de priorité requis prédéfini de chaque APN
(b) établir une connexion radio entre ledit terminal mobile et ladite station de base ; et
(c) établir une liaison de données sur ladite connexion radio entre ledit dispositif terminal et le réseau afin d'accéder au service de données indiqué comprenant les étapes supplémentaires consistant à :
- comparer le niveau de priorité reçu dans la requête au niveau de priorité mappé avec l'APN reçu stocké dans le réseau ;
- si le niveau de priorité correspondant à l'APN est inférieur au niveau de priorité reçu, demander l'établissement d'une connexion au niveau de priorité inférieur au niveau de priorité reçu, et dans le cas contraire, demander l'établissement d'une connexion du niveau de priorité reçu ;
(d) déterminer un ensemble de paramètres d'optimisation de connexion radio en fonction du niveau de priorité demandé à l'étape (c) ;
(e) établir la connexion radio en fonction desdits paramètres d'optimisation à l'étape (d).

2. Procédé selon la revendication 1, comprenant en outre l'étape d'établissement d'un premier support entre le terminal mobile et ledit réseau UMTS en réponse à ladite requête de liaison de données.

3. Procédé selon la revendication 2, dans lequel ledit premier support est défini par au moins un attribut et ladite étape de détermination d'un ensemble de paramètres d'optimisation de connexion radio comprend les étapes consistant à :
définir ledit au moins un attribut en fonction de l'APN ; et
définir un ensemble de paramètres d'optimisation de connexion radio en fonction dudit au moins un attribut.

4. Procédé selon la revendication 3, dans lequel le premier support est un contexte de Protocole de Données de Paquets (PDP) établi entre le terminal mobile et le réseau central.

5. Procédé selon la revendication 1, dans lequel la connexion radio est un support radio.

6. Procédé selon la revendication 3, dans lequel ledit au moins un attribut est un paramètre de Qualité de Service (QoS).

7. Procédé selon la revendication 6, dans lequel lesdits paramètres QoS comportent la classe de trafic et la priorité de prise en charge du trafic.

8. Procédé selon la revendication 7, dans lequel ladite étape de définition dudit au moins un attribut est une étape de définition d'une classe de trafic et d'une priorité de prise en charge du trafic en fonction d'une correspondance entre la classe de trafic et la priorité de prise en charge du trafic et l'APN, la correspondance étant mémorisée dans le réseau.

9. Procédé selon la revendication 8, dans lequel ladite correspondance est mémorisée dans un Enregistreur de Position de Rattachement.

10. Procédé selon la revendication 9, dans lequel lesdits paramètres d'optimisation sont définis en fonction d'une correspondance entre les paramètres d'optimisation et la classe de trafic et la priorité de prise en charge du trafic, la correspondance étant mémorisée dans le réseau.

11. Procédé selon la revendication 10, dans lequel ladite correspondance est mémorisée dans le Réseau d'Accès Radio Terrestre UMTS (UTRAN).
